# EUROPEAN PATENT SPECIFICATION

(11) **EP 0 237 839 B1**
(45) Date of publication and mention of the grant of the patent: **28.08.1996**
(21) Application number: 87102623.3
(22) Date of filing: 24.02.1987
(51) Int. Cl.: G06F 13/376, H04L 12/413

(54) **Serial data bus for intermodule data communications and method of data arbitration and collision detection on a data bus**
Serieller Datenbus für Datenübertragung zwischen Modulen und Verfahren zur Datenarbitrierung und zur Kollisionsdetektion auf einem Datenbus
Bus de données sériel pour transmission de données entre modules et méthode d'arbitrage de données et de détection de collisions sur un bus de données

(30) Priority: 24.02.1986 US 832908; 24.02.1986 US 832909
(43) Date of publication of application: 23.09.1987
(73) Proprietor: CHRYSLER CORPORATION, Highland Park Michigan 48203 (US)
(72) Inventor: Miesterfeld, Frederick O.R., Troy Michigan 48084 (US); McCambridge, John M., Northville Michigan 48167 (US); Fassnacht, Ronald E., Rochester Michigan 48063 (US)
(74) Representative: Dipl.-Ing. H. Hauck, Dipl.-Ing. E. Graalfs, Dipl.-Ing. W. Wehnert, Dr.-Ing. W. Döring, Dr.-Ing. N. Siemons

(56) References cited:
- WO-A-84/00862
- GB-A- 1 158 889
- US-A- 3 543 246
- US-A- 3 863 220
- IEEE TRANSACTIONS ON CONSUMER ELECTRONICS, vol. CE-27, no. 1, February 1981, pages 102-116, New York, US; C.H. KAPLINSKY: "The D2B a one logical wire bus for consumer applications"
- IEEE TRANSACTIONS ON NUCLEAR SCIENCE, vol. NS-31, no. 1, February 1984, pages 239-242, New York, US; A. COJAN et al.: "The fastbus cable segment"
- SAE TECHNICAL PAPER - INTERNATIONAL CONGRESS AND EXPOSITION, Detroit, Michigan, 24th - 28th February 1986, no. 860389, pages 1-5, Society of Automotive Engineers Inc.; F.O.R. MIESTERFELD: "Chrysler collision detection (C2D)-A revolutionary vehicle network"

## Description

### BACKGROUND OF THE INVENTION

### 1. Field Of The Invention

The present invention relates to a communication system for the transmission of data messages according to the preamble of claim 1 as known from IEEE Transactions On Consumer Electronics, Vol. CE-27, no.1, Feb. 1981 pages 102 - 116 New York US; C.H. Kaplinsky and US Patent No. 4429 384 referred to below.

The purpose of the subject invention is to provide a data communications network for providing communication of parametric data between microprocessors and/or microcomputers. Although the particular embodiment described grew out of experiences in the automotive environment, such a bus could be adaptable to a variety of non-automotive applications, also. Although the interface integrated circuit developed is capable of supporting many types of higher level communications protocols, such as master-slave or token passing, it is primarily useful in a collision detection network.

### 2. Description Of The Prior Art

The demand for linking of isolated intelligence incorporated in microprocessors and microcomputers in various stand-alone equipment is well known.

Some solutions used to link the isolated intelligence of microprocessors and microcomputers include Local Area Networks (LAN). LANs link several microprocessors or microcomputers, each of which can take control of the serial data channel and transmit data to any other unit. Some of the problems of LANs are complex protocols, controllers and software, and the need for more complexity in larger systems.

In smaller applications which link several microprocessors or microcomputers within a relatively small area, a much less complex performance than is supplied by a typical LAN is needed to handle the throughput of a small number of microprocessor or microcomputer controlled units.

Known in the art is a digital data bus designed to handle the above-described level of performance. Such a digital data bus system is described in U.S. Patent No. 4,429,384 to Kaplinsky issued on January 31, 1984, "Communication System Having An Information Bus And Circuits Therefor". The prior art reference depends upon transmitting a word ot identify the originator or a word to identify the destination in sending the address of the master, the address of the slave, at least one control bit and an acknowledgement bit.

The reference teaches a fixed priority scheme. One microprocessor is assigned the top priority and the other microprocessors in the network are assigned lower priorities. Any message sent is determined by a fixed priority of the microprocessors, disregarding the fact how important the message is compared with the message to be sent by another microprocessor.

Some of the differences between the prior art noted above and the subject invention is that the prior art uses speed shifting and the subject invention operates at a constant speed. Another difference is that the prior art utilizes an acknowledged bit from the receiving station whereas the subject invention does not. As such, the subject invention does not require a tight link between the transmitting station and the receiving station(s) which would require that the receiving station(s) respond during a message transmission.

SAE, Technical Paper, no. 830536, Feb, 28, 1983, pages 1 to 6, A.J. Bozzini : "Serial Bus Structures for Automotive Applications" and GB-A-2 074 425 disclose simular systems in which each unit can take control of the bus when it needs it, but again depend on transmitting identifying address woods. IEEE Transactions on Nuclear Science, Vol. NS-31, no.1, Feb, 1984, pages 239 - 242, A. Cojan et. al. "The Fast Bus Cable Segment" relates to a bus which is operated with differential current drivers and differential line receivers.

It is an object of the subject invention to simplify the point-to-point message format of state-of-the-art serial data buses by changing it to a broadcast message format. This means that the heart of simplification is the elimination of a word to identify the originator of the message and another word for the identification of the destination of the message.

According to the invention, the object is solved by the features of claim 1. The subclaims define further aspects of the present invention.

According to the invention, a message ID byte is used to identify the data being transmitted or the information being communicated. In some cases, the message will consist of a message ID only. In other cases, the message ID will identify the data that follows the message ID. If need be, point-to-point format can still be accommodated.

According to the invention, the priority is established by the message identification ID regardless of the source. Thus, the priority of the system is dynamically elocated during the operation of the system. The ability of a message to be sent on the network is determined by its priority and not on a priority assigned to the microprocessor which generates it.

It is an additional aspect object of the subject invention to provide an SCI port as a part of the serial data interface IC.

The subject communications bus is a two wire differential signal system in which several user microprocessors are connected to the bus, in parallel, through a bus interface IC. All user microprocessors connected to the bus can receive all messages sent on the network. User microprocessors with messages to send follow a simple set of rules to arbitrate for the use of the bus.

All user microprocessors operate independently of each other. User microprocessors can be set up to only receive, only transmit or both receive and transmit messages.

This system is flexible and easily expandable. User microprocessors can be added and deleted with little or no impact on the operation of the bus or the other microprocessors on the bus other than that due to message volume or message protocol.

The bus operates at a predetermined baud rate and the bus interface IC depends on an externally supplied clock signal. Pin selectable clock divide options are available.

All messages on the bus use the following format:
message ID byte 1; message ID byte 2; ... message ID byte N; data byte 1; data byte 2 ... data byte N.

The message ID byte(s) is (are) a unique value that identifies the message and is (are) the first byte(s) of the message transmitted. At least one message ID byte is needed. The simultaneous transmission of the message ID bytes from several user microprocessors occurs during bus arbitration and the unique message ID values enable the collision detection system described herein to automatically select during arbitration one of the several transmitting users as the winner and, therefore, current user of the bus.

A given message is normally transmitted by only one user microprocessor on a given bus.

Messages are normally received by all user microprocessors on the bus and may be processed by one or more user microprocessors. User microprocessors may, after having received the message ID byte(s) of a message, decide that the message is not needed for their operation. The user microprocessor may then elect to wait for the next message ID byte(s) and, therefore, not take up the time necessary to receive any data bytes that may be transmitted with the current, not needed, message.

Data bytes and/or a message parity byte are optional and depend on the given message being transmitted.

A message parity byte is a byte that is transmitted during the data byte portion of the message and is used to check the correctness of the message ID bytes and other data bytes in the message.

There are no inherent limitations on the length of messages sent over the bus, but the anticipated usage of the bus for automotive communications requires only messages with lengths of one to six total bytes including the message ID byte and an optional message parity byte with most of the messages having lengths of two or three bytes.

All bytes are transmitted on the bus in an asynchronous format: start bit first, 8 data bits (least significant bit first) and a stop bit at the end using asynchronous non-return to zero (NRZ) coding. The start bit is a logic zero and a stop bit is a logic one.

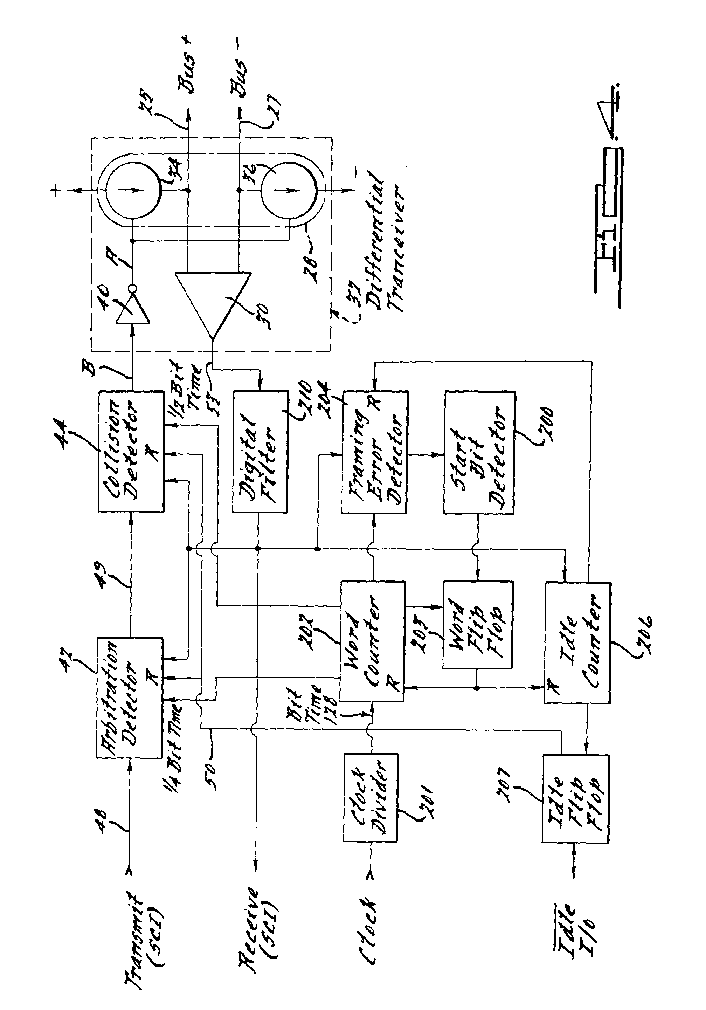

The bus 26 is biased by pull-up resistor 58 and pull-down resistor 59 at a level approximately one-half the value of the difference between + and - sources. See the External Bias Circuit in Fig. 3.

The collision detection bus interface IC can support various modes of interface to the user microprocessor. The mode described herein is that of a serial communications interface (SCI).

The SCI mode is designed to interface the bus to the SCI facilities normally available in microprocessors (i.e., two wire, full duplex, asynchronous, byte/character orientation, medium speed).

Generally, during message transmission, while a byte is being transmitted to the bus, its reflected byte is simultaneously being received.

### DESCRIPTION OF THE DRAWINGS

Other objects, features and advantages of the present invention will become more fully apparent from the following detailed description of the preferred embodiment, the appended claims and in the accompanying drawings in which:
Fig. 1 is a block diagram showing the serial bus network;
Fig. 2 is a simplified block diagram of the bus interface IC showing some of the functional internals of the bus interface IC;
Fig. 3 is an External Bias Circuit;
Fig. 4. is a more detailed block diagram of the bus interface IC;
Fig. 4a is a flowchart showing how the arbitration works;
Fig. 4b is a flowchart showing how the collision detector works;
Fig. 5 is a timing diagram showing an example of the collision detection bus interface IC operation during arbitration;
Fig. 6 is a general message processing flowchart; and
Fig. 7 is an illustration of the message format.

### DETAILED DESCRIPTION OF THE PREFERRED EMBODIMENT

Hereby expressly incorporated by reference is an SAE Technical Paper prepared by Frederick O. R. Miesterfeld entitled "Chrysler Collision Detection (C²D) A Revolutionary Vehicle Network" to be delivered at the 1986 Society of Automotive Engineers Conference on February 26, 1986. The Miesterfeld paper will be assigned the number "SAE Technical Paper No. 860389."

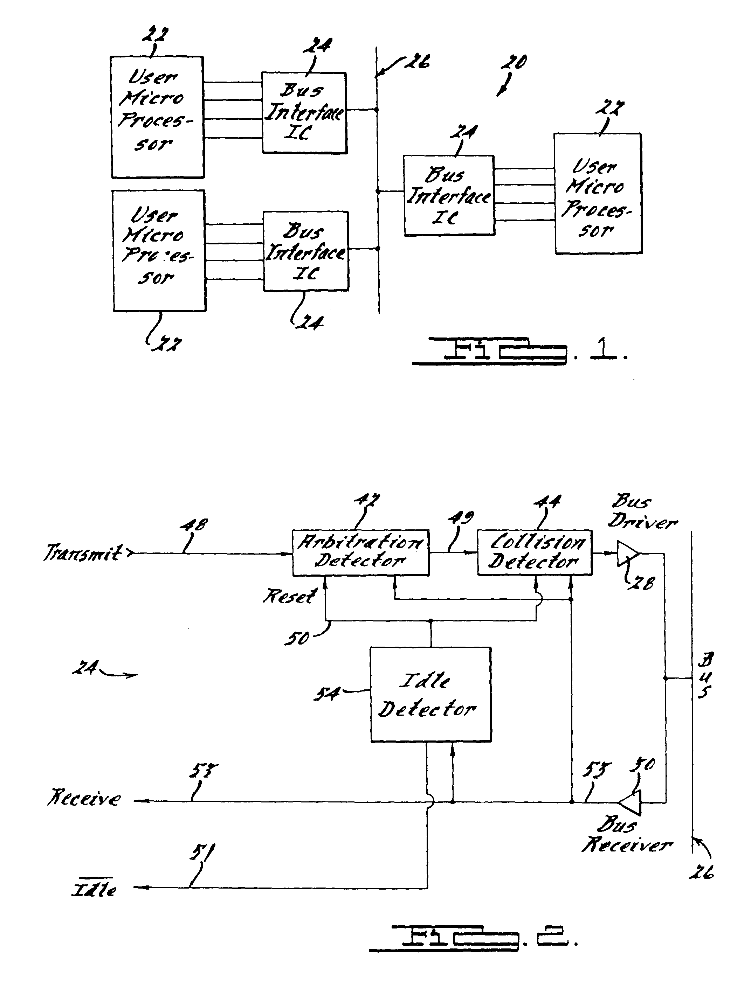

Referring now to Fig. 1, the serial bus network 20 is shown. A large number of user microprocessors 22 may be connected to the bus 26 through the serial bus interface ICs 24.

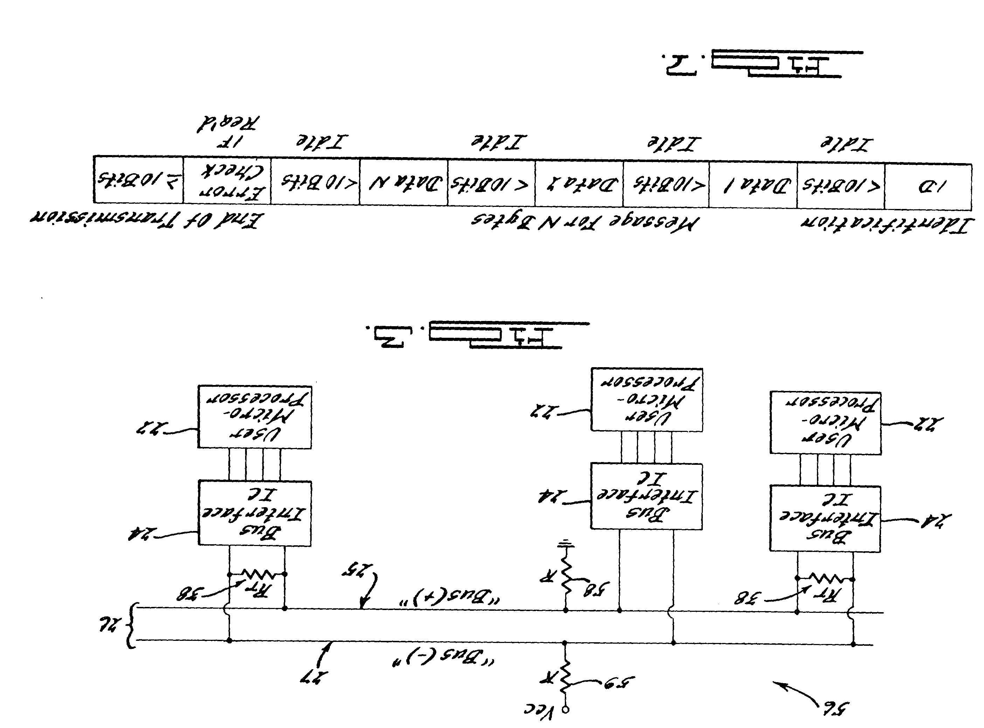

Referring now to Fig. 2, the bus interface IC 24 is broken down to illustrate some of its internal functions. The IC 24 is still connected to the bus 26 via bus driver 28 and bus receiver 30.

The differential output circuit defined by bus driver 28 is used in the bus interface IC 24 to transmit data onto bus 26 and gives priority to a zero bit over a one bit.

The nominal or Idle signal on the bus 26 Is a logic one bit. If the bus Is Idle or if a user microprocessor 22 is sending a logic one bit, then a logic one appears on the bus 26 and is presented to bus receiver 30 and eventually onto line 53 for presentation to a user microprocessor 22. Only when at least one bus interface IC 24 sends a logic zero bit, does a logic zero bit appear on the bus 26.

If one or more bus interface ICs 24 output a logic one bit on the bus 26 and at least one bus interface IC 24 is outputting simultaneously a logic zero bit, then a logic zero bit will appear on bus 26. When one IC 24 outputs a logic zero bit, it wins over all other modules simultaneously outputting logic one bits.

If multiple bus interface ICs 24 want to send a message on the bus 26 simultaneously, they go through arbitration which starts after occurrence of a logic low signal on idle line 51 (an idle condition on the bus) for at least 1/4 bit time where one bit time is equal to the input clock frequency + 128.

Fig. 2 will be explained in greater detail below.

Referring now to Fig. 3, the external bias circuit 56 is illustrated. A voltage supply V_{CC} is connected to the bus 26 by means of a pull-down resistor 59 and a pull-up resistor 58 that completes the circuit to ground. The bus 26 consists of a two wire twisted pair with the Bus+ 25 side being connected to pull-up resistor 58 and the Bus-27 side being connected to the pull-down resistor 59. Connected to the (+) and (-) sides of bus 26 are two wires connecting the bus interface IC 24. The interface IC 24 is, in turn, connected to a user microprocessor 22 as shown.

Two termination resistors R_{T} are shown connected across two interface ICs 24 at the physical ends of the network. Other interface ICs 24 are tapped off of the main twisted pair and do not require a termination resistor.

Communication theory deals with hardware and usually two or three layers ol message protocol to get down to the message information carried in the transmission. In the subject invention, communication is done via two wires to minimize radio frequency interference.

The principle used in the subject invention to create a signal to transmit information deals with the pulling up of one wire of the bus with a current and the pulling down the other wire of the bus with an equal and opposite current such that the net AC effect is zero.

The termination resistors R_{T} 38 connected to the Bus- 27 and Bus+ 25 lines at the ends of the bus 26 are used to match the characteristic impedance of the bus 26 and thereby minimize the generation of noise by the bus 26 and minimize the effect on the bus 26 from noise generated by other signal generating systems.

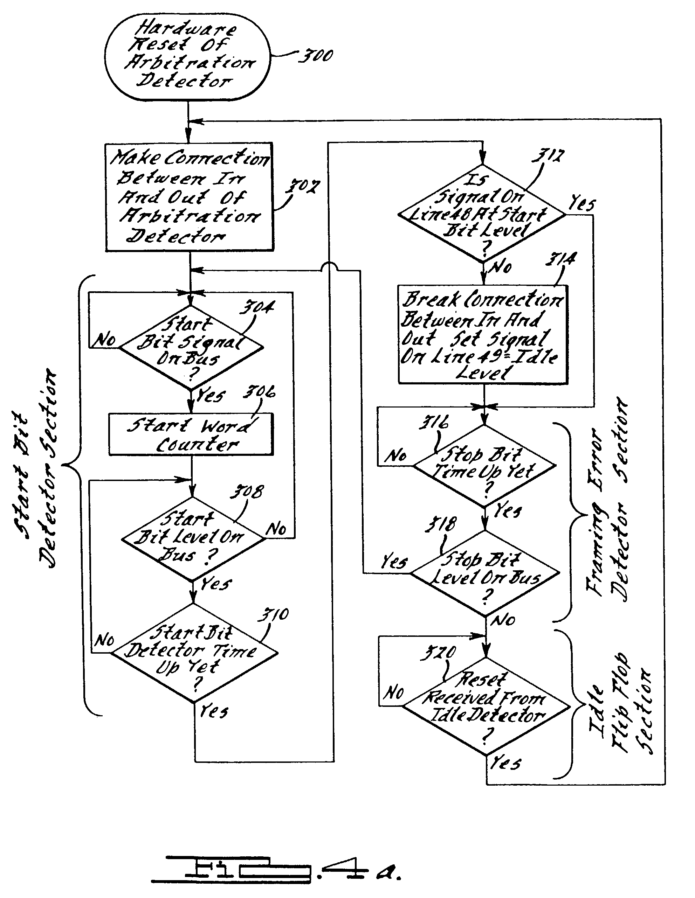

The effect of this theory on the data bus can be seen by looking at the circuit shown in Fig. 3 and that of the block diagram of the bus interface IC shown in Fig. 4. Attention is invited to Bus+ 25 and Bus- 27 in both Figs. 3 and 4 to show where the two figures are matched on the bus side. The TRANSMIT, RECEIVE, CLOCK and IDLE lines shown in Fig. 4 connect to the user microprocessor 22 as illustrated in Fig. 3.

It can be seen, therefore, that when the lines 25 and line 27 from the bus 26, as connected to the bus interface IC 24, have practically the same potential when connected with resistors R_{T} 38 at the ends of the bus 26, that this condition can be defined as a logical one. Likewise, when the lines 25 and 27 are separated or driven with an equal and opposite current from the differential transceiver 32 shown in Fig. 4, that condition can be defined as a logical zero.

It should be noted that the system shown illustrates a data bus 26 with two wires or lines and several loads connected in parallel. Assume for a moment that there are only two loads, one at each end of the wires or lines. The two wires or lines are a twisted pair with a characteristic impedance due to that twisted pair. An impedance R_{T} is included at each end of the bus 26 to match the characteristic impedance of the bus 26. R_{T} is a termination resistor and is shown as 38 in Fig. 3. The circuitry of the differential transceiver 32 is shown in Fig. 4.

Returning now to Fig. 2, attention is invited to arbitration detector 42 which is connected to the bus driver 28 via collision detector 44. The arbitration detector 42 checks for the reception of the beginning of a start bit from the user microprocessor 22 within a predetermined time after or before the arbitration detector 42 detects the beginning of a start bit on bus 26. It makes the detection of a start bit from the bus 26 by monitoring the output of bus receiver 30. If the arbitration detector 42 does not detect the beginning of a start bit from the user microprocessor 22, either before or within 1/4 bit time after detecting a start bit from the bus 26, the arbitration detector 42 blocks the user microprocessor 22 from accessing the bus 26 until the beginning of the next start bit on the bus 26 or from the user microprocessor 22.

The collision detector 44 compares the bits being sent to the bus 26 from the user microprocessor 22 via the arbitration detector 42 with the bits being received by the bus receiver 30 from the bus 26. The collision detector 44 also controls the connection between the user microprocessor 22 and the bus 26, either allowing the user microprocessor's 22 signal bits on TRANSMIT line 48 to reach the bus 26 or by blocking the bits from reaching the bus.

The collision detector 44 begins to block data from reaching the bus 26 as soon as it detects a difference between the current bit the user microprocessor 22 is trying to send on the bus 26 and the current bit the bus receiver 30 is receiving from the bus 26.

Once set, the collision detector 44 will continue to block user microprocessor 22 transmitted data from reaching the bus 26 until it is reset at the bus idle condition.

The collision detector 44 differs from the arbitration detector 42 in that the collision detector 44 compares all of the bits, bit by bit, of the transmitted and received bytes, start bit through stop bit inclusive, and it does the comparison at or near the middle of the bit interval.

The arbitration detector 42 only samples the start bit of every byte and does its comparison a designated time period (1/4 bit time) after the beginning of the start bit.

The arbitration detector 42 and the collision detector 44 are reset via line 50 to allow the user microprocessor 22 to again arbitrate for the bus 26 after bus idle occurs.

User microprocessors 22 that lose arbitration normally will not try to send any additional message bytes once they have lost. But if they do, all of the message bytes that they may try to send to the bus 26 via bus driver 28 will be blocked from reaching the bus 26 by the arbitration detector 42 and the collision detector 44.

When a user microprocessor 22 transmits a message on the bus 26, it should check the value of the idle signal on line 51 first. If the idle signal on line 51 is at a low logic value or has just gone to a low logic level from a high logic level, the user microprocessor 22 can begin to send the first message ID byte of the message to be transmitted to the bus interface IC 24 through the TRANSMIT signal on line 48.

The signal received by the bus interface IC 22 through the TRANSMIT connection 48 is sent to the arbitration detector 42. The arbitration detector 42, after having received a reset signal on line 50 from the idle detector 54, checks that the beginning of the start bit of each byte received from the user microprocessor 22 through the TRANSMIT signal on line 48 has arrived at the arbitration detector 42 before, at the same time or within 1/4 bit time after the beginning of a start bit has appeared on the bus 26. The arbitration detector 42 receives any data on the bus 26 through the bus receiver 30. The output of the bus receiver 30 is a signal on line 53. If, after the arbitration detector 42 has received a reset signal on line 50, the beginning of a start bit appears at the TRANSMIT signal line 48 before, at the same time or within 1/4 bit time after the arbitration detector 42 detects the beginning of a start bit on the bus 26, the arbitration detector 42 passes the signal it is receiving from the TRANSMIT signal on line 48 unchanged to its output 49 and continues to do so until it determines that a stop bit has been correctly received from the bus 26 or it again receives a reset signal on line 50 at which time it again checks for the beginning of the next start bit from the TRANSMIT signal on line 48 and/or from the bus 26 via the bus receiver 30. If, after the arbitration detector 42 determines that a stop bit has been correctly received or it has received a reset signal 50, the beginning of a start bit appears at the TRANSMIT signal on line 48, more than 1/4 bit time after the arbitration detector 42 detected the beginning of a start bit on the bus 26, the arbitration detector 42 begins to send a constant high logic level signal through its output 49 and continues to send a high level logic signal and not monitor the beginnings of start bits until after it determines that a stop bit has been correctly received or it receives the next reset signal on line 50.

The output of the arbitration detector 42, signal 49, is sent to the collision detector 44.

After having received a reset signal on line 50, the collision detector 44 compares, at the middle of each bit interval, the signal received from the arbitration detector 42, signal 49, with the output signal of the bus receiver 30, the signal on line 53. If after having received a reset signal on line 50, the logic level of the signal from the arbitration detector 42, the signal on line 49, is equal to the logic level of the signal output from the bus receiver 30, the signal on line 53, then the collision detector 44 continues to pass the signal received from the arbitration detector 42, the signal on line 49, to the bus driver 28. The first time after having received the reset signal on line 50 that the logic level of the signal on line 49 is a logic level one and the signal on line 53 is a logic level zero, the collision detector 44 outputs a constant high logic level signal to the bus driver 28 which has the effect of blocking the data received from TRANSMIT line 48 from transmission onto the bus 26 and continues to do so until it receives another reset signal on line 50.

The reset signal on line 50 is generated by the idle control detector 54 when the detector 54 detects the beginning of an idle condition. The detector 54 detects the beginning of the idle condition by sensing a continous bus idle signal level for 10 continuous bit times after having detected a stop bit signal level 8 bit times or more after having detected a start bit on line 53. If, after 8 bit times after having detected a start bit on line 53, a stop bit signal level is not received, the idle control detector 54 waits until a stop bit level signal is detected before it begins to count down the continuous 10 bit long period of bus idle signal. This action is classified as a framing error and the collision detector 44 blocks further sampling for a start bit until the idle control detector 54 senses 10 continuous bus idle signals.

If, during the count down of the 10 bit bus idle period, a non-idle level signal is detected by the idle control detector 54 which lasts for 1/4 bit time or less, the 10 bit idle period is restarted. If the non-idle signal lasts for longer than 1/4 bit time, the signal is classified as the beginning of a start bit and the idle control detector 54 begins again to count down the 8 bits times after the start bit. This action is classified as normal data transmission and a reset signal on line 50 is not generated.

At the same time that the reset signal on line 50 is generated, the idle control detector 54 also changes the idle signal on line 51 from a high logic level to a low level. The idle control detector 54 switches the idle signal on line 51 to a high logic level whenever it detects after having been reset to a low logic level by the detection of a bus idle condition, a non-idle signal level on line 53. If the non-idle signal lasts for 1/4 bit time or less, the idle signal on line 51 returns to a low logic level as soon as the non-idle signal returns to the idle level. If the non-idle signal lasts for longer than 1/4 bit time, the signal is interpreted as the beginning of a start bit and the idle signal on line 51 continues to stay at a high logic level until an IDLE condition is detected and the reset signal on line 50 is generated again.

Referring now to Fig. 4, the combination of the bus driver 28 and bus receiver 30 is called the differential transceiver 32. The bus driver 28 consists of a current source 34 and a current sink 36. The current source is 34 and the current sink 36 are connected to the external bias circuit as shown in Fig. 3. The current source 34 and current sink 36 are interconnected with termination resistors 38 at the ends of the bias which is matched to be the characteristic impedance of the bus 26. This is shown in Fig. 3. The bus 26 consists of a plus wire 25 and a minus wire 27. The resistor 38 is connected across the two wires or lines 25 and 27 across the bus interface IC 24 at each end of the bus 26. Also connected across line 25 and line 27 is the bus receiver 30.

The signal received on the TRANSMIT connection 48 is passed through the arbitration detector 42 and the collision detector 44 and on to the bus driver 28, when transmitted from the user microprocessor 22.

The coded signal from the collision detector 44 is presented to an inverter 40 on line B.

A logic zero on line B presented to inverter 40 will eventually turn the bus driver 28 on. The logical zero at the input to inverter 40 results in a high output from the inverter on line A. This high output turns on current source 34 and current sink 36. This action holds or drives the Bus+ 25 and Bus- 27 lines apart with an equal and opposite current. This results in the logical zero output from the bus receiver 30. This predominates over a logical one at a relaxed or idle state.

A low output from the inverter 40 on line A shuts off current source 34 and current sink 36 thereby allowing the Bus+ 25 and Bus- 27 lines to return back to a relaxed or idle state if no other bus interface ICs 24 are simultaneously driving the bus 26 to a logical zero level.

The circuit and method shown herein utilizes a Serial Communication Interface (SCI) of the user microprocessor 22. This is basic to the operation of the bus interface IC 24.

When the start bit detector 200 senses a valid start bit via word flip flop 203, it causes the word counter 202, to synchronize itself to the timing of the received data word. The word counter 202 is used to generate a 1/4 bit time pulse for the arbitration detector 42 and a 1/2 bit time pulse for the collision detector 44. This is accomplished via the clock signal from user microprocessor 22 and clock divider 201.

The word counter 202 triggers the framing error detector 204 at the stop bit time. If the stop bit is not detected, the idle counter 206 is extended by the framing error detector 204 until a stop bit level signal is detected.

The collision detector 44 samples the transmitted input and the received output. The function of collision detector 44 is to block transmissions that could interrupt bus operations. Functionally, it accomplishes this by allowing transmissions to start only when the bus 26 is idle.

If two or more systems want to transmit at about the same time, the collision detector 44 will allow transmission on a first come, first serve basis. If these systems both try to transmit in synchronism, i.e., within an arbitration window of 1/4 bit time, the collision detector 44 will permit only the one with the highest priority message ID byte(s) to continue transmitting.

When a user microprocessor 22, connected to the bus 26, is ready for transmission, it utilizes the following procedure.

First, the user microprocessor 22 looks at the IDLE Line and waits until it goes to a logic zero via idle flip flop 107 indicating that the bus 26 is idle.

Next, the user microprocessor 22 tries to transmit the first message ID byte associated with the data to be transmitted.

If the user microprocessor 22 started transmitting first or has the highest priority message ID byte(s), the collision detector 44 will permit the transmission.

The user microprocessor 22 confirms transmission by reading the received message ID byte and comparing it with the message ID byte the user microprocessor 22 wanted to transmit. If the same message ID byte was transmitted, the rest of the message can be transmitted. If not, the user microprocessor 22 must check to see if the received message ID byte and data is needed for its own use.

Data collision may result due to outside interference or a request for arbitration when long data strings are transmitted. The user microprocessor 22 that is transmitting data can compare the transmitted data with the received data for this type of data collision. Appropriate action should then be taken by the user microprocessor 22.

More specifically, the operation of the arbitration detector 42 is explained in conjunction with the flowchart shown in the Fig. 4a and the operation of the collision detector 44 is more fully shown with respect to the flowchart shown in Fig. 4b.

Referring to Fig. 4a, a hardware reset signal is sent to the arbitration detector in block 300 turning the arbitration detector 42 on. A connection is made in the arbitration detector between the input on line 48 and the output on line 49. This is done in block 302.

In decision block 304, the arbitration detector 42 determines whether there is a start bit on the data bus 26. If not, the arbitration detector waits. If the start bit signal is on the data bus 26, the arbitration detector 42 starts the word counter 202 in block 306.

Next, the arbitration detector determines whether the start bit level is on the data bus 26. This is done in block 308. If not, the system returns to block 304 to recheck the start bit signal on on the data bus 26.

If the start bit level is on the data bus 26, the start bit detector 200 is polled to see whether the start bit detector time is up yet. If it is not, the arbitration detector returns to block 308 to recheck the start bit level on the bus 26. If the start bit detector time is up as checked in block 310, the arbitration detector has completed its use of the functions performed by the start bit detector 200 in blocks 304, 306, 308 and 310.

Next, the arbitration detector 42 in block 312 checks to see if the signal on its input line 48 is at the start bit level. If it is not, the connection is broken between the input and output of arbitration detector 42 and the arbitration detector sets the signal on its output line 49 equal to the idle level. This is done in block 314. If the signal level on the input to the arbitration detector 42, as checked in block 312, is at the start bit level, the arbitration detector branches to block 316 interfaced with the framing error detector 204 in blocks 316 and 318. In block 316, the arbitration detector 42 checks to see whether the stop bit time period is up yet. If it is not, the arbitration detector waits. If the stop bit time is up, the arbitration detector checks with the framing error detector 204 to see if the stop bit level is on the data bus 26. This is done in block 318. If the stop bit level is on the bus 26, the arbitration detector returns to block 304 to begin the procedure from that point forward by rechecking the start bit signal to see whether it is on the bus 26.

If the stop bit level is not on the bus 26 as checked in block 318, the arbitration detector 42 looks at information supplied by the idle flip flop 207. The arbitration detector checks to see whether a reset signal is received from the idle detector which in this case is the idle flip flop 207. If no reset signal has been received, the arbitration detector waits. If a reset signal is received, the arbitration detector returns to block 302 to again make the connection between the input and output of the arbitration detector to begin arbitration again.

Returning now to the collision detector 44, an explanation of the flowchart in Fig. 4b is provided. If a hardware reset signal is received at the collision detector 44, the collision detector proceeds from block 400 to block 402 to make a connection between the input and output of the collision detector 44. This connects the input line 49 to the output line B.

Next, the collision detector 44 checks the start bit signal on the bus 26 in block 404. If the start bit signal is not on the bus 26, the collision detector waits. If the start bit signal is on the bus 26, the collision detector moves to block 406 to start the word counter 202. Following the start of the word counter 202, the collision detector checks to see whether the start bit level is on the data bus 26. If the start bit level is not on the bus 26, the collision detector returns to block 404 to recheck to see if the start bit signal is on the data bus 26. If the start bit level is on the data bus 26, the collision detector proceeds to block 410 to check to see whether the start bit detector time is up yet. This check is of a condition in the start bit detector 200. If the start bit detector time is not up yet, the collision detector 44 returns to block 408 to recheck to see whether the start bit level is on the data bus 26. If the start bit detector time is up, the collision detector 44 has ended its involvement with the start bit detector 200 from blocks 404, 406, 408 and 410.

The collision detector 44 next moves to block 412 and interfaces with the word counter 202 to check to see whether a midbit timer, internal to the word counter 202, is up yet. If not, the collision detector 44 waits. If the midbit timer is up, the collision detector 44 falls through to block 414 to check to see whether the signal on the input line 49 is equal to the signal on the bus 26. If the signal on the input line is equal to the signal on the bus 26, the collision detector 44 branches to block 416 and begins to interface with the framing error detector 204 in blocks 416 and 418. The collision detector 44 checks to see whether the stop bit time is up yet in block 416. If not, the collision detector returns to block 412. If the stop bit time is up, the collision detector 44 falls through to block 418 to check to see whether the stop bit level is on the bus 26. If the stop bit level is on the bus 26, the collision detector 44 returns to block 404 to see whether the start bit signal is on the data bus 26.

If the stop bit level is not on the bus 26 as checked in block 418, the collision detector 44 falls through to block 420 to check to see whether a reset has been received from the idle detector or idle flip flop 207. If not, the collision detector waits. If the reset has been received, the collision detector 44 returns to block 402.

Returning to the block 414, if the in signal to the collision detector 44 is not equal to the bus signal, the collision detector 44 falls through to block 422 to break the connection between the collision detector input and output and to set the signal on its output line B equal to the idle level. Next, the collision detector 44 falls through to block 420 as previously described.

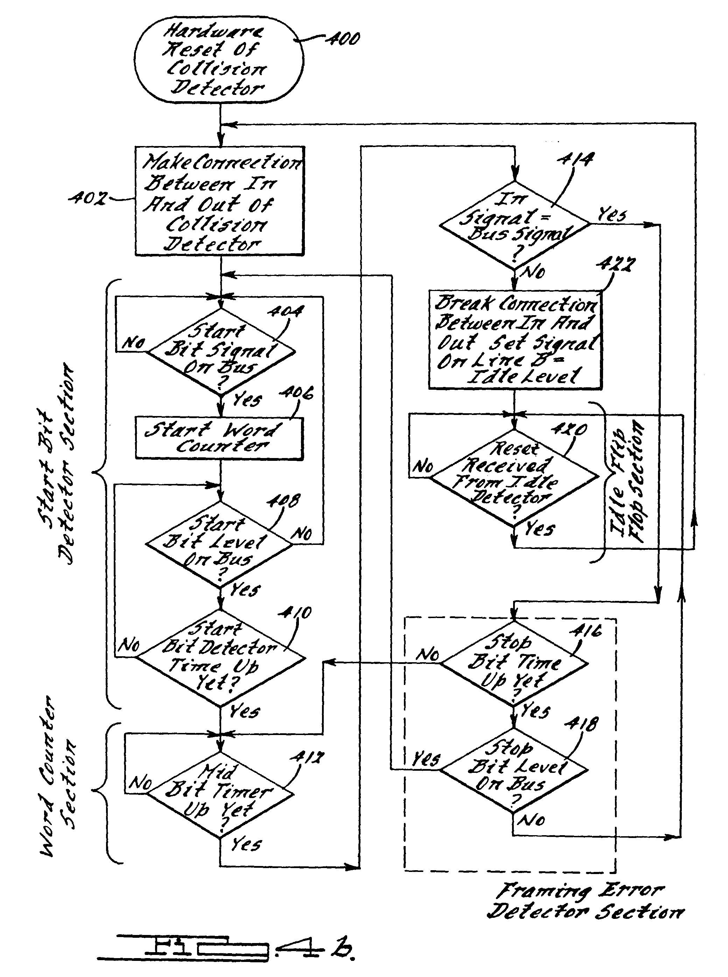

If the Referring now to Fig. 5, an example of the bus interface integrated circuit operation during arbitration is presented. The diagram shows the detailed operation of the bus interface during an arbitration. The example shows the arbitration of single byte messages, i.e., the message ID byte only, from three user microprocessors 22. Two full arbitration cycles are shown. The operation of the IDLE line is also shown.

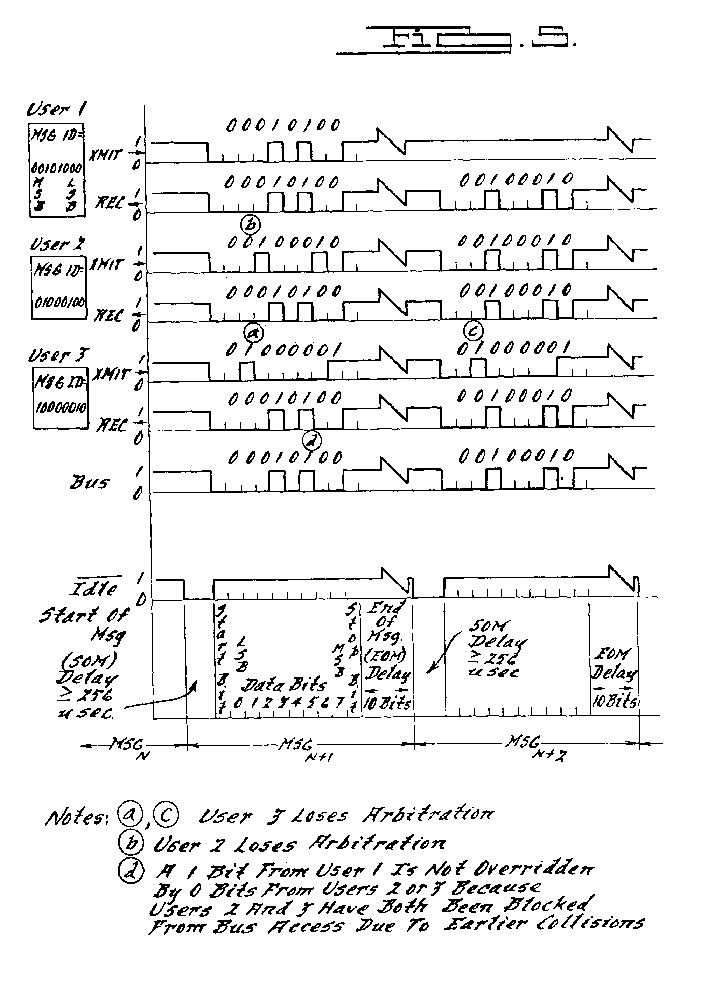

Referring now to Fig. 6, a general message processing diagram is presented. Fig. 6 shows the general description of the steps a user microprocessor 22 would go through in order to send or receive data on the subject bus 26.

For simplicity, these steps, and the associated flowchart, use the polling type approach to detecting when events happen. Actual implementation could use interrupt detection logic and servicing routines instead. This description assumes that all necessary port and IC initialization is done elsewhere.

Beginning in block 60, the routine checks to synchronize with the bus IDLE. The program waits until the bus 26 is in the idle condition, i.e., IDLE signal on line 51 goes low, the program then falls through to point 62 to start transmitting or receiving. The idle signal is checked again in block 64 and the program waits until either the first byte, that is, the message ID byte of a message is received from the bus from block 66 or whether a message to send on the bus is available from block 68, whichever comes first. If a byte is received from the bus first, the program falls through to block 70. If a message is available to send to the bus first, then the program falls through to point 72 to attempt to win bus arbitration.

During the attempt to win bus arbitration at point 72, the first byte which is the message ID byte, is sent onto the bus 26. This is done in block 74. The program then waits until a byte is received from the bus 26 in block 76 before moving on to check on whether the arbitration was won or lost at point 78. All microprocessors with a message to send will attempt to send their first message bytes on to the bus at the same time. Only the winner will succeed in having all the bits of its first byte sent successfully over the bus.

A check on arbitration to see who won or lost Is done at point 78. If the byte received back from the bus in block 80 is the same as the byte sent to the bus, then the arbitration has been won and the rest of the message can be sent at point 82. If the byte received from the bus is not the same as the byte sent to the bus, then arbitration has been lost and the byte received from the bus is the first byte of the winning message. Therefore, if arbitration is lost, the program branches to point 70.

The routine then falls through to block 84 to send the rest of the message bytes, if any, to the bus. As each byte is sent to the bus, a resultant byte is received from the bus 26. This is shown by referring to blocks 86, 88, 90 and 92. In block 86, the next message byte is sent and then its reception from the bus 26 is checked in block 88. The received byte is checked to see whether it is equal to the transmitted byte in block 90 and if it is, the program returns to block 84 to again check for more message bytes. If the received byte is not equal to the transmitted byte, the program falls through to block 92 and terminates the message transmission due to a collision.

When all the message bytes have been sent, the program falls through from block 84 through to point 94 indicating that the send message is complete. The transmitted message is then deleted from the input queue in block 96. At this point, the routine returns to point 60 to synchronize or to resynchronize with the bus idle condition.

Returning now to point 70, where the system is set to receive a message, the program checks in block 98 to see whether the message is of interest to this particular microcomputer or microprocessor. If the message is not of interest, the program returns to resynchronize with the bus idle condition at point 60. If the message is of interest, the program falls through to block 100 to save the received byte and wait for the reception of the other bytes of the message from the bus, or for the bus to go idle, i.e., low. These steps are done in blocks 102 and 104.

When the bus goes idle, the program falls through to point 106 indicating that the received message is complete. The microcomputer or user microprocessor 22 is then allowed to process the received message in block 108 and/or make it available for further processing by others. The program then falls through to point 60 to resynchronize again with the bus IDLE condition.

The protocol which best meets the requirements for a Data Communications Network is Carrier Sense Multi Access (CSMA). These requirements are outlined in the Miesterfeld SAE Paper No. 860389 which is expressly incorporated by reference.

A deterministic priority access method of resolving contention was chosen instead of the non-deterministic random back-off procedure associated with classic collision detection.

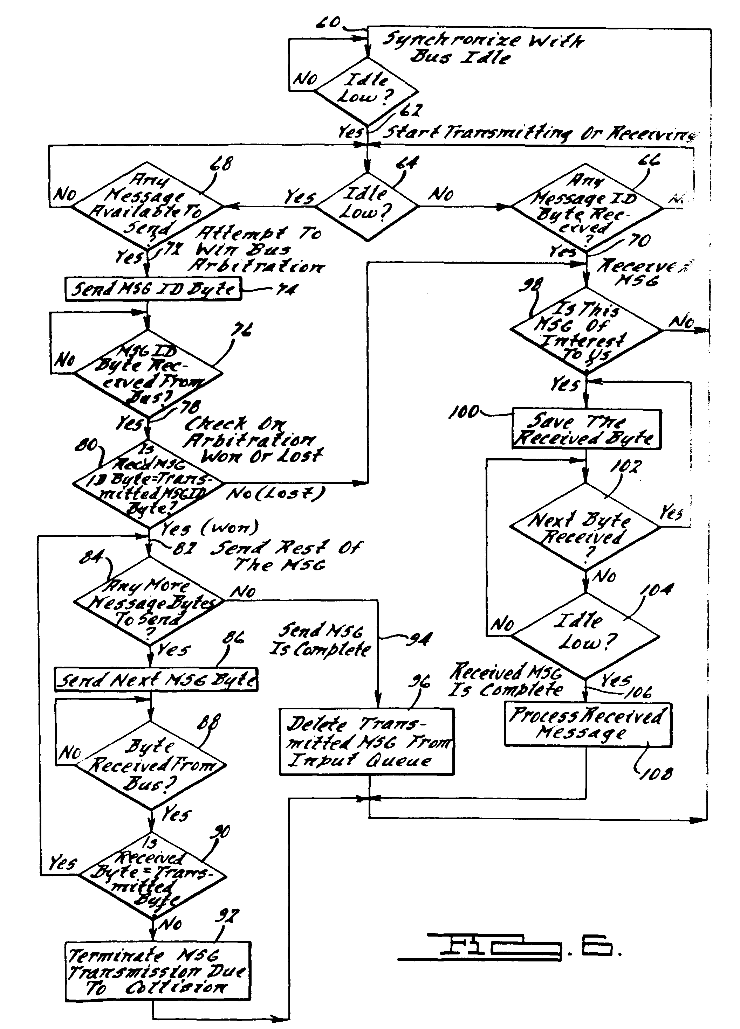

Refer now to Fig. 7, where the message format is presented.

Take note that idle periods, shown in Fig. 7, are allowed between each byte of data. This permits the use of firmware control and direct connection to a host microprocessor or microcomputer's asynchronous serial I/O port. Standard UART NRZ is the bit encoding technique.

Now that the invention has been described, a more detailed explanation is here provided regarding the actual operation of the bus interface IC 24.

### ZERO BITS HAVE PRIORITY OVER ONE BITS

The differential transceiver output circuit 32 used in the bus interface IC 24 gives priority to a zero bit over a one bit.

The nominal or idle signal on the bus is a one bit. If the bus 26 is idle or if a user microprocessor is sending a one bit, then a one appears on the bus 26. Only when a bus interface IC 24 sends a zero bit does a zero bit appear on the bus 26.

If the multiple bus interface IC's 24 are sending data on the bus 26 simultaneously, as is done at bus arbitration, with one or more bus interface ICs 24 outputting a one bit on the bus 26 and at least one bus interface IC 24 is outputting a zero bit, then a zero bit will appear on the bus 26.

Zero bits always win out over one bits on the bus 26.

### ARBITRATION DETECTION

The arbitration detector 42 passes a byte from the user microprocessor 22 onto the collision detector 44 if its start bit arrives before or within 1/4 bit time after a start bit appears on the bus 26.

Once set, the arbitration detector 42 blocks the user microprocessor 22 from accessing the bus 26 until after the next bus idle condition.

The arbitration detector 44 performs its check at the beginning of the start bit of every byte in a message, but it is really only effective for the first byte of a message.

### COLLISION DETECTOR

The collision detector 44 compares the bits being sent to the bus 26 from the user microprocessor 22 with the bits being received by the bus interface IC 24 from the bus 26. The collision detector 44 controls the connection between the user microprocessor 22 and the bus 26 either allowing the user microprocessor's 22 bits to reach the bus 26 or blocking the bits from reaching the bus 26.

The collision detector 44 differs from the arbitration detector 42 in that the collision detector 44 compares all the bits of the transmitted and received bytes, start bit through stop bit inclusive, and it does its comparison during the middle of the bit interval. The arbitration detector 42 only works on the start bit of every byte and it does its comparison 1/4 bit time after the beginning of the start bit.

At the detection of a bus idle condition, the collision detector 44 is reset to allow data from the user microprocessor 22 to reach the bus 26.

The collision detector 44 begins to block data from reaching the bus 26 as soon s it detects a difference between the current bit the user microprocessor 22 is trying to send on the bus 26 and the current bit the bus interface IC 24 is receiving from the bus 26.

Once set, the collision detector 44 will continue to block data transmitted from user microprocessor 22 from reaching the bus 26 until it is reset at the bus idle condition.

The collision detector 44 is reset only at bus idle.

User microprocessors 22 that lose arbitration normally will not try to send any additional message bytes once they have lost arbitration. If they do, all of the message bytes they may send to the bus interface IC 24 will be blocked from reaching the bus 26 by the collision detector 44.

### REFLECTED BYTES

Whenever a user microprocessor 22 sends a byte to the bus interface IC 24 for transmission, it always receives back a reflected byte.

The reflected byte is the byte that was actually seen on the bus 26 and is the effective sum of all of the data being transmitted on the bus 26 at the same time, given the way the differential transceiver 32 operates, i.e., zero bits have priority, and any noise or other outside signals that may be on the bus 26.

At arbitration, or after a collision with noise or other outside signals, the reflected byte may bear little resemblance to the original message byte. This is the result of the bus driver 39 giving priority to the zero bits over one bits.

The user microprocessor 22 must always wait and compare the reflected byte it receives back from the bus interface IC 24 with the last byte it tried to transmit to see if it lost out at arbitration or if its data collided with noise or other interfering signals on the bus 26. In both cases, the reflected byte will not equal the last byte transmitted and the user microprocessor 22 should stop attempting to transmit message bytes. After losing out at arbitration, a user microprocessor 22 must check the received message ID byte to see if it needs to receive the winning message.

### ATTEMPTED TRANSMISSIONS

All transmissions on the bus 26 are really attempted transmissions. A number of factors may interfere with the transmission a given user microprocessor 22 may be trying to make, such as: (I) the arbitration and collision detectors 42 and 44 will cut off or block the transmission of data from a user microprocessor 22 to the bus 26; (2) after a user microprocessor 22 goes through the motions of transmitting a byte, it must look at the reflected byte to see what actually made it to the bus 26; (3) at arbitration, the user microprocessor 22 attempts to send its message ID byte. If it wins the use of the bus 26, it attempts to send any remaining message bytes.

Generally, attempts to transmit on the bus 26 will be successful, but the user microprocessor must process message byte transmissions as attempts, compare the reflected byte/bytes with the last transmitted byte/bytes and be ready to handle attempt failures.

### ARBITRATION

Arbitration or bus arbitration is the attempted transmission on the bus 26 of a message ID byte by one or more user microprocessors.

The purpose of arbitration is to enable a user microprocessor 22 to obtair sole use of the bus 26 for the purpose of transmitting a message.

Arbitration begins either 2 bit time after bus idle begins or later when a user microprocessor 22 has a message to transmit if the bus 26 is still idle.

The 2 bit time delay between the beginning of the bus idle (i.e, IDLE going low) and the beginning of arbitration is called the start of message delay (SOM Delay). An automatic 2 bit time delay is built into the bus interface IC 24. User microprocessors 22 that use the SCI support will experience an inherent delay of approximately 2 bit time in their SCI port.

Due to the arbitration detector 42 and collision detector 44, the priority of zero bits over one bits on the bus 26 and the use of unique message ID bytes for all messages on the bus 26, only one message ID byte will be successfully transmitted at arbitration if one or multiple user microprocessors 22 attempt arbitration at the same time.

If one user microprocessor 22 attempts arbitration and wins the bus 26, all other user microprocessors 22 will be blocked from transmitting until after a bus idle condition by their arbitration and collision detectors 42 and 44, respectively.

If multiple user microprocessors 22 attempt arbitration, and all begin to transmit their start bits within 1/4 bit time of each other, then the effect of zero bits having priority over one bits and the use of unique message ID bytes will cause the collision detector 44 in all but one transmitting bus interface IC 24 to begin to block their access to the bus 26 some time between the first and last data bits of their message ID bytes.

Any user microprocessor 22 - bus interface IC 24 combination that begins to transmit the start bit of their message ID byte later than 1/4 bit time after the first start bit appears on the bus 26, after bus idle, will be block from accessing the bus 26 by the arbitration detector 42 and will be kept from accessing the bus 26 until the bus idle resets the arbitration detector 42 and collision detector 44.

All user microprocessors 22 on the bus 26, whether they are attempting to transmit a message ID byte or not, will receive the successful message ID byte.

The start of arbitration is synchronized in all user microprocessors 22 and bus interface ICs 24 by the occurrence of bus idle, i.e., when IDLE goes from high to low. The earliest the transmission of the message ID byte should begin on the bus is 2 bit time after bus idle occurs, i.e., no user microprocessor 22 - bus interface IC 24 combination should start transmitting a message ID byte sooner than that.

Arbitration ends when only one user microprocessor 22 has access to the bus 26 due to the blocking action of the arbitration detector 42 and collision detector 44 in all the other bus interface ICs 24 on the bus 26.

Each user microprocessor 22 that attempted to transmit a message ID byte, must compare the reflected byte they received with the message ID byte they tried to transmit in order to find out if they won arbitration or not.

Those user microprocessors 22 whose reflected message ID byte does not equal the message ID byte they attempted to transmit, have lost at arbitration. The reflected message ID byte equals the attempted ID byte only for the winning microprocessor 22, assuming the use of unique message IDs.

User microprocessors 22 that have lost arbitration should consider their attempted message transmission as aborted, stop attempting to transmit any remaining bytes in their messages, and wait until bus idle reoccurs before attempting to transmit their message again. Their collision detector 44 will not let them transmit anything onto the bus 26 until bus idle reoccurs anyway.

Losing using microprocessors 22 should also consider receiving and processing the arbitration winner's message. The message might be for them.

If the the message the winning user microprocessor 22 is transmitting has any additional bytes, it must continue transmitting them. In doing so, it must not exceed the interbyte gap maximum of 7 bit times between the end of a stop bit and the beginning of the next start bit. If the bus goes idle for 8 bit times, all bus interface ICs 24 interpret that as a bus idle condition which will cause them to reset their arbitration detector 42 and collision detector 44 and signal bus idle to their user microprocessors 22 through the IDLE line 52. The user microprocessors 22 with messages to send will, in turn, begin to send their message ID bytes while the old winning user microprocessor 22 is still trying to send one of its message data bytes. Even the old winning user microprocessor 22 will see its IDLE go low.

When the winning user microprocessor 22 has transmitted all the bytes in its message, it stops sending bytes to the bus interface IC 24 and waits for the bus idle again.

### BUS IDLE

Bus idle is the operating state of the bus 26 where no user microprocessor 22 has control of the bus 26.

Bus idle starts when the transmission of the last message on the bus 26 ends.

Bus idle ends when the start bit of a message ID byte is detected on the bus 26.

Bus idle is detected by all bus interface ICs 24 on a given bus 26 and is indicated to their respective user microprocessors 22 through the IDLE line 51. IDLE goes low at the beginning of bus idle and goes high at the end of bus idle.

The start of bus idle causes the reset of the arbitration detector 42 and collision detector 44 in all the bus interface ICs 24 on the bus 26.

The start of bus idle functionally indicates to all user microprocessors 22 that: (I) the last message on the bus 26 has ended; (2) the next byte on the bus 26 should be interpreted as a message ID byte; and (3) bus arbitration should begin 2 bit time later.

In detail, bus idle starts after the occurrence of a 10 bit consecutive interval after a valid stop bit detected after an 8 bit interval after a start bit is detected on the bus 26.

The 10 bit consecutive idle interval is 10 bits of continuous idle (1). Normally, the 10 bit idle interval will begin after the stop bit (I) of a transmitted byte and will end 10 bit times later if no additional bytes are transmitted by the current owner of the bus 26. if at stop bit time, the stop bit is not detected, i.e., a 0 is detected, the 10 bit idle interval will not start until the bus 26 goes idle (I).

If during the monitoring for the 10 bit consecutive idle interval, a non-idle signal is detected, i.e., noise, then the 10 bit idle interval restarts. If, in fact, a start bit is detected during the wait for the 10 bit idle interval, then the wait for 8 data bits, a stop bit and the 10 bit consecutive idle interval restarts.

### FALSE IDLE TRANSITION

The IDLE line goes high whenever the idle detector 54 detects a transition from an idle level (I) to a low level (0). If the low level lasts for longer than 1/4 bit time, then IDLE will stay high until after the usual idle criteria has occurred. However, if the bus 26 has a signal that goes from idle to low and stays there for less than 1/4 bit time, then the IDLE line 51 will go high and then low again, creating a false bus idle transition.

User microprocessors 22 that detect this false transition must take it into consideration depending on what they are trying to do. Generally, they will not have to do anything. For example, SCI users that are waiting for the completion of the 2 bit time delay inherent in SCI type ports, can still wait for the reception of a reflected byte.

User microprocessors must not assume that a message has been received when this occurs.

## Claims

1. A communication system for the transmission of data messages through a data bus (26) between two or more user microprocessors (22) coupled to the data bus, the user microprocessors having a serial communications interface (SCI) port along with a clock port and an input/output port, the user microprocessors being coupled to the data bus by a bus interface integrated circuit (24) having a circuit to monitor the data bus and detect when the data bus is idle and when the data bus is busy, having a bus driver (28) to transmit data from the user microprocessor to the data bus and having a bus receiver (30), characterized in that the bus interface integrated circuit includes in combination: an arbitration detector (42), a collision detector (44) and an idle detector (54); in that the arbitration detector (42), the collision detector (44) and the bus driver (28) are connected in series between the SCI port of the user microprocessor (22) and the data bus (26) to transmit data from the user microprocessor to the data bus; in that the idle detector (54) is connected between the input/output port of the user microprocessor (22) and individually to the arbitration detector (42) and collision detector (44) to monitor the data bus and detect when the data bus is idle and when the data bus is busy, in that a user microprocessor (22) generates a message ID byte which establishes priority of the message on the bus independently of the microprocessor generating the message and that the collision detector (44) uses the message ID to select during arbitration one of several transmitting user microprocessors based on the priority of the message and independently of the microprocessor transmitting the message.

2. The communication system of claim 1, further comprising:
a digital filter (210) connected between the bus receiver (30) and the SCI port of the user microprocessor (22) to filter out noise from the data messages before being processed by other parts of the bus interface integrated circuit;
timing and synchronizing means to establish synchronizing and a baud rate timing signal for use by the arbitration detector, collision detector and idle detector comprising:
a clock divider (201) to receive a clock pulse from the user microprocessor (22) to generate a clock signal;
a word counter (202) to accept the clock signal and present timing and synchronizing information to the arbitration detector (42) and to the collision detector (44);
a start bit detector (200) to count and indicate when a start bit signal and level is present on the data bus;
a framing error detector (204) to count and indicate when a stop bit signal level is present on the data bus;
an idle detector (206, 207) to monitor and indicate when the data bus is in an idle condition.

3. A method of transmitting data messages through a data bus (26) between two or more user microprocessors (22) coupled to the data bus, each said user microprocessor including a communications port (SCI) for transmitting data messages to and receiving data messages from said data bus, each user microprocessor being coupled to the data bus by a bus interface integrated circuit (24) that is connected in series between said port of each user microprocessor and the data bus, said bus interface circuit including a circuit (30,54) for monitoring the data bus and detecting when the data bus is idle and when the data bus is busy, a bus driver (28) for transmitting data from the microprocessor to the data bus and a bus receiver (30) for receiving data from the data bus, said message data having at least one start bit and one stop bit, characterized by the steps of
when data is available for transmission by a user microprocessor (68, 72, fig.6), determining if said bus is in an idle condition (62, 64);
enabling the transmitting of data on said data bus (82, 84, 86) upon detection of said idle condition, each said user microprocessor transmitting a unique message ID byte representing the priority of the message to be sent on said bus independently of the identity of the microprocessor transmitting the message;
arbitrating (80) the message ID byte data transmitted on said bus when several user microprocessors are simultaneously transmitting message ID bytes on said data bus; and, during arbitration,
detecting collisions (30, 32) between transmitted message bytes and message bytes received back from said bus by each user microprocessor to enable (80, 82) one user microprocessor of said several transmitting user microprocessors to determine whether it has control of said data bus based on the priority of the message ID.

4. The method of claim 3 characterized in that said bus interface circuit further includes an arbitration detector (42), collision detector (44), and an idle detector (54), said idle detector connected to said communications port (SCI) of the microprocessor (22) to monitor the data bus (26) and detect when the data bus is idle or busy, a word counter (202) including a midbit timer for accepting a clock signal and presenting timing and synchronizing information to the arbitration detector and to the collision detector, a framing error detector (204) for counting and indicating when a start bit signal and level is present on the data bus, and, a start bit detector (200), the step of arbitrating said message ID data characterized by the steps of:
monitoring (404) the data bus until a start bit signal is on the data bus indicating that a start bit may be on the bus;
starting (406) said word counter to synchronize itself to the timing of the received data if a start bit signal is on the data bus;
checking (408) the data bus to see whether a start bit level has been reached on the data bus indicating that a start bit is on the bus and returning to monitor the data bus until a start bit signal is on the data bus;
if the start bit level is on the data bus, checking (410) the start bit detector to see if the start bit detector time has elapsed, and returning to monitor the data bus to recheck whether the start bit level is on the data bus if the start bit detector time has not elapsed;
checking (414) the input to the arbitration detector to see whether the input is at a start bit level;
if the signal on the input line to the arbitration detector is not at the start bit level, setting (422) the output of the arbitration detector equal to an idle level to indicate that the bus is idle;
if the signal on the input line to the arbitration detector is at the start bit level, monitoring (416) the framing error detector until the stop bit time period has elapsed;
if the stop bit time has elapsed, checking (418) the data bus to see if the stop bit level is on the data bus, returning to monitor the data bus until the start bit signal is on the data bus; and,
monitorinf (420) the idle detector until a reset signal is received from the idle detector if the stop bit level is not on the data bus, and returning to repeat the above steps if the reset signal has been received from the idle detector.

5. The method of claim 4, wherein said step of detecting collisions between said transmitted and received messages is characterized by the steps of:
monitoring (410) the start bit detector to see if the start bit detector time has elapsed and if the start bit detector time has elapsed, monitoring (412) the midbit timer in the word counter until the midbit timer has elapsed;
when the midbit timer has elapsed, determining (414) whether the input to the collision detector is equal to the signal on the data bus;
if the signal on the data bus is equal to the input to the collision detector, checking (416) the framing error detector to see whether the stop bit time has elapsed;
if the stop bit time has elapsed, checking (418) whether the stop bit level is on the bus, else rechecking (412) whether the midbit timer is up if the stop bit time has not yet elapsed;
if the stop bit level is on the bus, returning to monitor (404) the data bus until a start bit signal is on the data bus;
if the stop bit level is not on the bus, checking (420) the idle detector to see whether a reset signal has been received and monitoring the idle detector until a reset signal has been received;
returning to repeat the above procedure once the reset signal is received from the idle detector;
if the input to the collision detector is not the same as the data on the bus, setting (422) the output of the collision detector equal to the idle level and thereafter monitoring (420) the idle detector until a reset signal has been received and thereafter returning to repeat the above procedure.

6. The method of claim 3, characterized by blocking (92) data transmission from a user microprocessor to said data bus when said data bus is busy or when said user microprocessor has lost control of said data bus during arbitration.

7. The method of claim 6, wherein said blocking data step is characterized by the steps of:
synchronizing (60) the communication system with the occurrence of a bus idle condition;
waiting until the synchronization occur (62) before transmitting or receiving messages;
if the data bus is in an idle condition, determining (68) whether the user microprocessor has a message available to send;
attempting to win bus arbitration if a message is available to send by sending (74) a message ID byte;
checking (76) to see whether the message ID byte was received from the data bus;
checking to see whether the arbitration was won or lost if the message ID byte was received from the data bus, by comparing (80) the received message ID byte to see whether it is equal to the transmitted ID byte;
sending (82, 84, 86) the rest of the message if the received message ID byte is equal to the transmitted message ID byte;
determining (84) whether any more message bytes are to be sent to the data bus and sending (86) the next message byte if needed;
deleting (96) he transmitted message from the input queue if the message is complete and returning to re-synchronize (60) with the bus idle condition;
if next message byte is sent, checking (90) to see whether the received byte is equal to the transmitted byte and returning to check whether any more message bytes need to be sent if the received byte is equal to the transmitted byte; and,
terminating (92) the message transmission due to a collision if the received byte is not equal to the transmitted byte and re-synchronizing with the bus idle condition.

8. The method of claim 7, wherein said blocking data transmission step is further characterized by the steps of:
if the data bus is in an idle condition, checking (66) whether any message ID byte is received from the data bus;
if a message is received, checking (98) to see whether the message is of interest to the user microprocessor, re-synchronizing (60) with the bus idle condition if it is not and saving (100) the received byte if it is;
if the received byte is saved, checking (102) to see if there is a next byte to be received;
checking (104) to see whether the data bus is in an idle condition and processing (108) the received message if the data bus is in an idle condition before re-synchronizing (60) with the bus idle condition, or, returning to receive (102) the next byte of the message if the bus is not in an idle condition.

## Patentansprüche

1. Kommunikationssystem für die Datenübertragung von Nachrichten über einen Datenbus (26) zwischen zwei oder mehreren an den Datenbus angeschlossenen Benutzer-Mikroprozessoren (22), die einen seriellen Kommunikations-Schnittstellenanschluß (SCI) zusammen mit einem Taktsignalanschluß und einem Eingang/Ausgang aufweisen und an den Datenbus über eine Busschnittstellen-integrierte Schaltung (24) mit einer Schaltung angeschlossen sind, die den Datenbus überwacht und feststellt, wenn der Datenbus frei ist und wenn der Datenbus besetzt ist, mit einem Bustreiber (28) zum Übertragen von Daten vom Benutzer-Mikroprozessor zum Datenbus und mit einem Busempfänger (30), dadurch gekennzeichnet, daß die Busschnittstellen-integrierte Schaltung in Kombination aufweist: einen Arbitrationsdetektor (42), einen Kollisionsdetektor (44) und einen Freischaltdetektor (54), daß der Arbitrationsdetektor (42), der Kollisionsdetektor (44) und der Bustreiber (28) in Reihe zwischen dem SCI-Anschluß des Benutzer-Mikroprozessors (22) und dem Datenbus (26) geschaltet sind, um Daten vom Benutzer-Mikroprozessor zum Datenbus zu übertragen, daß der Freischaltdetektor (54) zwischen dem Eingang/Ausgang des Benutzer-Mikroprozessors (22) und individuell an den Arbitrationsdetektor (42) und Kollisionsdetektor (44) geschaltet ist, um den Datenbus zu überwachen und festzustellen, wann der Datenbus frei und wann er besetzt ist, daß ein Benutzer-Mikroprozessor (22) ein Nachrichten-ID-Byte erzeugt, das der Nachricht am Bus unabhängig von dem die Nachricht erzeugenden Mikroprozessor die Priorität zuteilt und daß der Kollisionsdetektor (44) das Nachrichten-ID-Byte benutzt, um während der Arbitration einen von mehreren übertragenden Benutzer-Mikroprozessoren basierend auf der Priorität der Nachricht und unabhängig von dem die Nachricht übertragenen Mikroprozessor auszuwählen.

2. Kommunikationssystem nach Anspruch 1, ferner mit einem digitalen Filter (210) zwischen dem Busempfänger (30) und dem SCI-Anschluß des Benutzer-Mikroprozessors (22), um Rauschen aus den Datennachrichten auszufiltern, bevor sie von anderen Teilen der Busschnittstellen-integrierten Schaltung verarbeitet werden, mit Zeit- und Synchronisiermitteln zum Erzeugen eines Synchronisiersignals und eines Baud-Zeitsignals für den Arbitrationsdetektor, den Kollisionsdetektor und den Freischaltedetektor mit:
einem Taktsignalteil (201) zum Empfangen eines Taktsignalimpulses aus dem Benutzer-Mikroprozessor (22) zum Erzeugen eines Taktsignals;
einem Wortzähler (202), der das Taktsignal erhält und Zeit- und Synchronisierinformationen dem Arbitrationsdetektor (42) und dem Kollisionsdetektor (44) zuführt;
einem Startbitdetektor (200) zum Zählen und Anzeigen, wann ein Startbitsignal und Pegel am Datenbus ansteht;
einem Blockfehlerdetektor (204) zum Zählen und Anzeigen, wann ein Stopbitsignal-Pegel am Datenbus ansteht;
einem Freischaltdetektor (206,207) zum Überwachen und Anzeigen, wann der Datenbus frei ist.

3. Verfahren zur Datenübertragung von Nachrichten über einen Datenbus (26) zwischen zwei oder mehreren an den Datenbus angeschlossenen Benutzer-Mikroprozessoren (22), von denen jeder einen Kommunikationsanschluß (SCI) zur Datenübertragung von Nachrichten an und Empfangen von Nachrichten vom Datenbus aufweist, jeder Benutzer-Mikroprozessor an den Datenbus über eine Busschnittstellen-integrierte Schaltung (24) angeschlossen ist, die in Reihe zwischen dem Anschluß jedes Benutzer-Mikroprozessors und dem Datenbus geschaltet ist, wobei die Busschnittstellen-Schaltung eine Schaltung (30,54) aufweist, die den Datenbus überwacht und feststellt, wann der Datenbus frei und wann er besetzt ist, sowie einen Bustreiber (28), der Daten vom Mikroprozessor zum Datenbus überträgt und einen Busempfänger (30) zum Empfangen von Daten vom Datenbus, wobei die Nachricht mindestens ein Startbit und ein Stopbit aufweist, gekennzeichnet durch folgende Schritte:
Es wird festgestellt, ob der Bus frei ist (62,64), wenn Daten zur Übertragung durch einen Benutzer-Mikroprozessor (68,72) (Fig. 6) verfügbar sind;
das Übertragen von Daten auf den Datenbus (82,84, 86) erfolgt bei Feststellung, daß der Bus frei ist, wobei jeder Benutzer-Mikroprozessor ein eindeutiges Nachrichten-ID-Byte überträgt, das unabhängig von der Indentität des die Nachricht übertragenden Mikroprozessors den Vorrang für die auf den Bus zu sendende Nachricht besitzt,
es erfolgt eine Arbitration (80) des auf den Bus übertragenen Nachrichten-ID-Bytes, wenn mehrere Benutzer-Mikroprozessoren gleichzeitig Nachrichten-ID-Bytes auf den Datenbus übertragen und
es werden während der Arbitration Kollisionen (90, 92) zwischen übertragenen Nachrichtenbytes und zurück vom Bus empfangenen Nachrichtenbytes von jedem Benutzer-Mikroprozessor festgestellt, um einen (80,82) von allen übertragenden Benutzer-Mikroprozessoren in die Lage zu versetzen, festzustellen, ob er basierend auf der Priorität des Nachrichten-ID-Bytes Zugang zum Datenbus hat.

4. Verfahren nach Anspruch 3, dadurch gekennzeichnet, daß die Busschnittenstellen-Schaltung ferner einen Arbitrationsdetektor (42), einen Kollisionsdetektor (44) und einen Freischaltdetektor (54) aufweist, der an den Kommunikationsanschluß (SCI) des Mikroprozessors (22) angeschlossen ist, um den Datenbus (26) zu überwachen und festzustellen, wann der Datenbus frei oder besetzt ist, daß ein Wortzähler (202) einen Mittenbit-Zeitgeber aufweist, der das Taktsignal akzeptiert und Zeit- und Synchronisier-Informationen an den Arbitrationsdetektor und den Kollisionsdetektor liefert, mit einem Blockfehlerdetektor (204) zum Zählen und Anzeigen, wann ein Startbitsignal und Pegel am Datenbus ansteht und mit einem Startbitdetektor (200), wobei die Arbitration der Nachrichten-ID-Daten durch folgende Schritte gekennzeichnet ist:
Der Datenbus wird überwacht (404), bis ein Startbitsignal am Datenbus ansteht, das anzeigt, daß am Bus ein Startbit vorhanden ist;
der Wortzähler wird gestartet (406), um sich mit der Zeitfolge der empfangenen Daten zu synchronisieren, wenn ein Startbitsignal am Datenbus ansteht;
der Datenbus wird geprüft (408), ob am Datenbus ein Startbitpegel erreicht worden ist, das anzeigt, daß am Bus ein Startbit vorhanden ist und es erfolgt eine Rückkehr, um den Datenbus zu überwachen, bis ein Startbitsignal am Datenbus ansteht;
wenn der Startbitpegel am Datenbus vorhanden ist, wird der Startbitdetektor (410) geprüft, ob die Startbit-Detektorzeit abgelaufen ist und es erfolgt eine Rückkehr, um den Datenbus zu überwachen, ob der Startbitpegel am Datenbus vorhanden ist, wenn die Startbit-Detektorzeit nicht abgelaufen ist;
der Eingang zum Arbitrationsdetektor wird geprüft (414), ob der Eingang auf Startbitpegel ist;
wenn das Signal auf der Eingangsleitung zum Arbitrationsdetektor nicht auf Startbitpegel ist, wird der Ausgang des Arbitrationsdetektors gleich einem Freischaltpegel gesetzt (422), um den freien Bus anzuzeigen;
wenn das Signal auf der Eingangsleitung zum Arbitrationsdetektor auf Startbitpegel ist, wird der Blockfehlerdetektor überwacht (416), bis die Stopbitzeitdauer abgelaufen ist;
wenn die Stopbitzeitdauer abgelaufen ist, wird der Datenbus geprüft (418), ob der Stopbitpegel am Datenbus vorhanden ist und es erfolgt die Rückkehr, um den Datenbus zu überwachen, bis das Startbitsignal am Datenbus vorhanden ist und
der Freischaltdetektor wird überwacht (42), bis ein Rücksetzsignal vom Freischaltdetektor empfangen wird, wenn der Stopbitpegel nicht am Datenbus vorhanden ist und es erfolgt eine Rückkehr, um die vorgenannten Schritte zu wiederholen, wenn das Rücksetzsignal vom Freischaltdetektor empfangen worden ist.

5. Verfahren nach Anspruch 4, bei dem der Schritt zum Feststellen von Kollisionen zwischen übertragenen und empfangenen Nachrichten durch folgende Schritte gekennzeichnet ist:
der Startbitdetektor wird überwacht (410), ob die Startbitdetektorzeit abgelaufen ist und wenn die Startbit-detektorzeit abgelaufen ist, wird der Mittenbit-Zeitgeber im Wortzähler überwacht (412), bis die Mittenbitzeit abgelaufen ist;
wenn die Mittenbitzeit abgelaufen ist, wird bestimmt (416), ob der Eingang zum Kollisionsdetektor gleich dem Signal am Datenbus ist;
wenn das Signal am Datenbus gleich dem Eingang am Kollisionsdetektor ist, wird der Blockfehlerdetektor geprüft (416), ob die Stopbitzeit abgelaufen ist;
wenn die Stopbitzeit abgelaufen ist, wird geprüft (418), ob der Stopbitpegel am Bus vorhanden ist, sonst wird erneut geprüft (412), ob die Mittenbitzeit abgelaufen ist, wenn die Stopbitzeit noch nicht verstrichen ist;
wenn der Stopbitpegel am Bus vorhanden ist, erfolgt die Rückkehr, um den Datenbus zu überwachen (404), bis ein Startbitsignal am Datenbus vorhanden ist;
wenn der Stopbitpegel nicht am Bus vorhanden ist, wird der Freischaltdetektor überprüft (420), ob ein Rücksetzsignal empfangen worden ist und der Freischaltdetektor wird überwacht, bis ein Rücksetzsignal empfangen worden ist;
Rückkehr zur Wiederholung des vorgenannten Vorganges, sobald das Rücksetzsignal vom Freischaltdetektor empfangen wird;
wenn das Eingangssignal am Kollisionsdetektor nicht gleich den Daten am Datenbus ist, wird der Ausgang des Kollisionsdetektors auf den Freischaltpegel gesetzt und dann der Freischaltdetektor überwacht (420), bis ein Rücksetzsignal empfangen worden ist und dann erfolgt die Rückkehr, um das vorgenannte Verfahren zu wiederholen.

6. Verfahren nach Anspruch 3, dadurch gekennzeichnet, daß die Datenübertragung eines Benutzer-Mikroprozessors an den Datenbus gesperrt wird (92), wenn der Datenbus besetzt ist oder wenn der Benutzer-Mikroprozessor den Zugang zum Datenbus während der Arbitration verloren hat.

7. Verfahren nach Anspruch 6, bei dem der Schritt zum Sperren der Daten wie folgt gekennzeichnet ist:
Das Kommunikationssystem wird beim Auftreten des Busfreizustandes synchronisiert (60);
vor dem Übertragen oder Empfangen von Nachrichten wird gewartet, bis die Synchronisation erfolgt (62);
ist der Datenbus frei, so wird bestimmt (68), ob der Benutzer-Mikroprozessor eine zum Senden verfügbare Nachricht hat;
es wird versucht, über eine Arbitration Zugang zum Bus zu erhalten, wenn eine Nachricht zum Senden (74) eines Nachrichten-ID-Bytes verfügbar ist;
es wird geprüft, ob das Nachrichten-ID-Byte vom Datenbus empfangen wurde;
es wird geprüft, ob die Arbitration gewonnen oder verloren ist, wenn das Nachrichten-ID-Byte vom Datenbus empfangen wurde, indem das empfangene Nachrichten-ID-Byte verglichen wird (80), ob es gleich dem übertragenen ID-Byte ist;
der Rest der Nachricht wird gesendet (82,84,86), wenn das empfangene Nachrichten-ID-Byte gleich dem übertragenen Nachrichten-ID-Byte ist;
es wird bestimmt (84), ob weitere Nachrichtenbytes zum Datenbus gesendet werden sollen und nötigenfalls wird das nächste Nachrichtenbyte gesendet (86);
die übertragene Nachricht wird aus der Eingangsschlange entfernt (96), wenn die Nachricht vollständig ist und es erfolgt die Rückkehr zur erneuten Synchronisierung (60) bei freiem Bus;
wenn das nächste Nachrichtenbyte gesendet wird, wird geprüft (90), ob das empfangene Byte gleich dem übertragenen Byte ist und es erfolgt die Rückkehr, um zu prüfen, ob weitere Nachrichtenbytes gesendet werden müssen, wenn das empfangene Byte gleich dem übertragenen Byte ist und
die Nachrichtenübertragung wird bei einer Kollision beendet (92), wenn das empfangene Byte nicht gleich dem übertragenen Byte ist und es erfolgt eine erneute Synchronisierung bei freiem Bus.

8. Verfahren nach Anspruch 7, bei dem das Sperren der Datenübertragung durch folgende weitere Schritte gekennzeichnet ist:
Wenn der Datenbus frei ist, wird geprüft (66), ob ein Nachrichten-ID-Byte vom Datenbus empfangen wird;
ist eine Nachricht empfangen, wird geprüft (98), ob die Nachricht für den Benutzer-Mikroprozessor von Interesse ist und wenn nicht, erfolgt ein erneutes Synchronisieren (60) bei freiem Bus, wobei das empfangene Byte so wie es ist, gesichert wird (100);
wenn das empfangene Byte gesichert ist, wird geprüft (102), ob es ein nächstes zu empfangendes Byte gibt,
es wird geprüft (104), ob der Datenbus frei ist und die empfangene Nachricht wird verarbeitet (108), wenn der Datenbus frei ist, bevor ein erneutes Synchronisieren bei freiem Bus (60) erfolgt, oder es erfolgt die Rückkehr, um das nächste Byte der Nachricht zu empfangen (102), wenn der Bus nicht frei ist.

## Revendications

1. Système de communication pour la transmission des messages de données via un bus de données (26) entre deux ou plusieurs microprocesseurs d'utilisateur (22) couplés au bus de données, les microprocesseurs d'utilisateur ayant un port d'interface de communication sériel (SCI) ainsi qu'un port d'horloge et un port d'entrée/sortie, les microprocesseurs d'utilisateur étant couplés au bus de données par un circuit intégré d'interface de bus (24) ayant un circuit pour contrôler le bus de données et détecter si le bus de données est au repos et si le bus de données est occupé, ayant un dispositif de commande de bus (28) pour transmettre des données du microprocesseur d'utilisateur au bus de données et ayant un récepteur de bus (30), caractérisé en ce que le circuit intégré d'interface de bus comprend en combinaison : un détecteur d'arbitrage (42), un détecteur de collision (44) et un détecteur de repos (54) ; en ce que le détecteur d'arbitrage (42), le détecteur de collision (44) et le dispositif de commande de bus (28) sont montés en série entre le port SCI du microprocesseur d'utilisateur (22) et le bus de données (26) pour transmettre des données du microprocesseur d'utilisateur au bus de données ; en ce que le détecteur de repos (54) est raccordé entre le port d'entrée/sortie du microprocesseur d'utilisateur (22) et individuellement au détecteur d'arbitrage (42) et au détecteur de collision (44) pour contrôler le bus de données et détecter si le bus de données est au repos et si le bus de données est occupé, en ce qu'un microprocesseur d'utilisateur (22) génère un octet d'ID de message qui établit la priorité du message sur le bus indépendamment du microprocesseur générant le message et en ce que le détecteur de collision (44) utilise l'ID de message pour sélectionner pendant l'arbitrage un des nombreux microprocesseurs d'utilisateur de transmission sur la base de la priorité du message et indépendamment du microprocesseur transmettant le message.

2. Système de communication de la revendication 1, comprenant en outre :
un filtre numérique (210) raccordé entre le récepteur de bus (30) et le port SCI du microprocesseur d'utilisateur (22) pour filtrer dans du bruit des messages de données avant d'être traité par d'autres parties du circuit intégré d'interface de bus ;
un moyen de temporisation et de synchronisation pour établir une synchronisation et un signal de temporisation de débit en baud utilisé par le détecteur d'arbitrage, le détecteur de collision et le détecteur de repos comprenant :
un diviseur d'horloge (201) pour recevoir une impulsion d'horloge du microprocesseur d'utilisateur (22) pour générer un signal d'horloge ;
un compteur de mots (202) pour accepter le signal d'horloge et les informations de temporisation et de synchronisation actuelles pour le détecteur d'arbitrage (42) et pour le détecteur de collision (44) ;
un détecteur de bit de début de message (200) pour compter et indiquer si un niveau de signal de bit de début de message est présent sur le bus de données ;
un détecteur d'erreur de formation de trame (204) pour compter et indiquer si un niveau de signal de bit de fin de message est présent sur le bus de données ;
un détecteur de repos (206, 207) pour surveiller et indiquer si le bus de données est dans un état de repos.

3. Procédé de transmission de messages de données via un bus de données (26) entre deux ou plusieurs microprocesseurs d'utilisateur (22) couplés au bus de données, chaque dit microprocesseur d'utilisateur comprenant un port de communication (SCI) pour transmettre des messages de données et pour recevoir des messages de données audit et dudit bus de données, chaque microprocesseur d'utilisateur étant couplé au bus de données par un circuit intégré d'interface de bus (24) qui est monté en série entre ledit port de chaque microprocesseur d'utilisateur et le bus de données, ledit circuit intégré d'interface de bus comprenant un circuit (30, 54) pour contrôler le bus de données et détecter si le bus de données est au repos et si le bus de données est occupé, un dispositif de commande de bus (28) pour transmettre des données du microprocesseur au bus de données et un récepteur de bus (30) pour recevoir des données du bus de données, lesdites données de message ayant au moins un bit de début de message et un bit de fin de message,
caractérisé par les étapes de :
lorsque des données sont disponibles pour une transmission par un microprocesseur d'utilisateur (68, 72, figure 6), détermination si ledit bus est dans un état de repos (62, 64) ;
validation de la transmission des données sur ledit bus de données (82, 84, 86) lors de la détection dudit état de repos, chacun desdits microprocesseurs d'utilisateur transmettant un octet d'ID de message unique représentant la priorité du message à envoyer sur ledit bus indépendamment de l'identité du microprocesseur transmettant le message ;
arbitrage (80) des données d'octets d'ID de message transmises sur ledit bus lorsque plusieurs microprocesseurs d'utilisateur transmettent simultanément des octets d'ID de message sur ledit bus de données; et pendant l'arbitrage,
détection des collisions (30, 32) entre des octets de messages transmis et des octets de messages reçus de nouveau dudit bus par chaque microprocesseur d'utilisateur pour permettre (80, 82) à un microprocesseur d'utilisateur desdits divers microprocesseurs d'utilisateur de transmission de déterminer s'il a la commande dudit bus de données sur la base de la priorité de l'ID de message.

4. Procédé selon la revendication 3, caractérisé en ce que ledit circuit intégré d'interface de bus comprend en outre un détecteur d'arbitrage (42), un détecteur de collision (44) et un détecteur de repos (54), ledit détecteur de repos raccordé audit port de communication (SCI) du microprocesseur (22) pour contrôler le bus de données (26) et détecter si le bus de données est au repos ou occupé, un compteur de mots (202) comprenant un dispositif de temporisation de moitié de bit pour accepter un signal d'horloge et présenter des informations de temporisation et de synchronisation au détecteur d'arbitrage et au détecteur de collision, un détecteur d'erreur de formation de trame (204) pour compter et indiquer si un niveau de signal de bit de début de message est présent sur le bus de données, et un détecteur de bit de début de message (200), l'étape d'arbitrage desdites données d'ID de message caractérisé par les étapes de :
contrôle (404) du bus de données jusqu'à ce qu'un signal de bit de début de message soit sur le bus de données indiquant qu'un bit de début de message peut être sur le bus ;
démarrage (406) dudit compteur de mots pour synchroniser lui-même la temporisation des données reçues si un signal de bit de début de message est sur le bus de données ;
contrôle (408) du bus de données pour voir si un niveau de bit de début de message a été atteint sur le bus de données indiquant qu'un bit de début de message est sur le bus et retour pour commander le bus de données jusqu'à ce qu'un signal de bit de début de message soit sur le bus de données ;
si le niveau de bit de début de message est sur le bus de données, contrôle (410) du détecteur de bit de début de message pour voir si la durée de détection de bit de début de message s'est écoulée, et retour pour contrôler le bus de données pour recontrôler si le niveau de bit de début de message est sur le bus de données si la durée de détection de bit de début de message ne s'est pas écoulée ;
contrôle (414) de l'entrée pour le détecteur d'arbitrage pour voir si l'entrée est à un niveau de bit de début de message ;
si le signal sur la ligne d'entrée pour le détecteur d'arbitrage n'est pas au niveau de bit de début de message, réglage (422) de la sortie du détecteur d'arbitrage égale à un niveau de repos pour indiquer que le bus est au repos ;
si le signal sur la ligne d'entrée pour le détecteur d'arbitrage est au niveau de bit de début de message, contrôle (416) du détecteur d'erreur de formation de trame jusqu'à ce que la période de durée de bit de fin de message se soit écoulée ;
si la durée de bit de fin de message s'est écoulée, contrôle (418) du bus de données pour voir si le niveau de bit de fin de message est sur le bus de données, retour pour contrôler le bus de données jusqu'à ce que le signal de bit de début de message soit sur le bus de données ; et
contrôle (420) du détecteur de repos jusqu'à ce qu'un signal de réinitialisation soit reçu du détecteur de repos si le niveau de bit de fin de message n'est pas sur le bus de données, et retour pour répéter les étapes ci-dessus si le signal de réinitialisation a été reçu du détecteur de repos.

5. Le procédé de la revendication 4, dans lequel ladite étape de détection des collisions entre lesdits messages transmis et reçus est caractérisée par les étapes de :
contrôle (410) du détecteur de bit de début de message pour voir si la durée de détection de bit de début de message s'est écoulée, et si la durée de détection de bit de début de message s'est écoulée et si la durée de détection de bit de début de message s'est écoulée, contrôle (412) du dispositif de temporisation de moitié de bit dans le compteur de mots jusqu'à ce que la durée de moitié de bit se soit écoulée ;
lorsque la durée de moitié de bit s'est écoulée, détermination (414) si l'entrée sur le détecteur de collision est égale au signal sur le bus de données ;
si le signal sur le bus de données est égal à l'entrée sur le détecteur de collision, contrôle (416) du détecteur d'erreur de formation de trame pour voir si la durée de bit de fin de message s'est écoulée ;
si la durée de bit de fin de message s'est écoulée, contrôle (418) si le niveau de bit de fin de message est sur le bus, alors recontrôle (412) si la temporisation de moitié de bit s'est écoulée si la durée de bit de fin de message ne s'est pas déjà écoulée ;
si le niveau de bit de fin de message est sur le bus, retour pour contrôler (404) le bus de données jusqu'à ce qu'un signal de bit de fin de message soit sur le bus de données ;
si le niveau de bit de fin de message n'est pas sur le bus, contrôle (420) du détecteur de repos pour voir si un signal de réinitialisation a été reçu et contrôle du détecteur de repos jusqu'à ce qu'un signal de réinitialisation ait été reçu ;
retour pour répéter la procédure ci-dessus une fois que le signal de réinitialisation est reçu du détecteur de repos ;
si l'entrée pour le détecteur de collision n'est pas la même que les données sur le bus, réglage (422) de la sortie du détecteur de collision égale au niveau de repos et ensuite contrôle (420) du détecteur de repos jusqu'à ce qu'un signal de réinitialisation ait été reçu et ensuite retour pour répéter la procédure ci-dessus.

6. Procédé selon la revendication 3, caractérisé par le blocage (92) de la transmission des données d'un microprocesseur d'utilisateur sur ledit bus de données lorsque ledit bus de données est occupé et lorsque ledit microprocesseur d'utilisateur a perdu la commande dudit bus de données pendant l'arbitrage.

7. Procédé selon la revendication 6, dans lequel ladite étape de données de blocage est caractérisée par les étapes de :
synchronisation (60) du système de communication avec l'occurrence d'un état de repos de bus ;
attente jusqu'à ce que la synchronisation se produise (62) avant la transmission ou la réception de messages ;
si le bus de données est dans un état de repos, détermination (68) si le microprocesseur d'utilisateur a un message disponible à envoyer ;
tentative de gagner l'arbitrage de bus si un message est disponible à envoyer par envoi (74) d'un octet d'ID de message ;
contrôle (76) pour voir si l'octet d'ID de message a été reçu du bus de données ;
contrôle pour voir si l'arbitrage a été gagné ou perdu si l'octet d'ID de message était reçu du bus de données, par comparaison (80) de l'octet d'ID de message reçu pour voir s'il est égal à l'octet d'ID transmis ;
envoi (82, 84, 86) du reste du message si l'octet d'ID de message reçu est égal à l'octet d'ID de message transmis ;
détermination (84) s'il n'y a plus d'octets de messages quelconques à envoyer au bus de données et envoi (86) de l'octet de message suivant si nécessaire ;
effacement (96) du message transmis par la file d'entrée si le message est terminé et retour pour la resynchronisation (60) avec l'état de repos de bus ;
si l'octet de message suivant est envoyé, contrôle (90) pour voir si l'octet reçu est égal à l'octet transmis et retour pour voir si des octets de messages quelconques ont besoin d'être envoyés si l'octet reçu est égal à l'octet transmis ; et,
fin (92) de la transmission du message due à une collision si l'octet reçu n'est pas égal à l'octet transmis et resynchronisation avec l'état de repos de bus.

8. Procédé selon la revendication 7, dans lequel ladite étape de transmission de données de blocage est en outre caractérisée par les étapes de :
si le bus de données est dans un état de repos, contrôle (66) si un octet d'ID de message quelconque est reçu du bus de données ;
si un message est reçu, contrôle (98) pour voir si le message concerne le microprocesseur d'utilisateur, resynchronisation (60) avec l'état de repos de bus s'il ne l'est pas et sauvegarde (100) de l'octet reçu s'il l'est ;
si l'octet reçu est sauvegardé, contrôle (102) pour voir s'il y a un octet suivant à recevoir ;
contrôle (104) pour voir si le bus de données est dans un état de repos et traitement (108) du message reçu si le bus de données est dans un état de repos avant la resynchronisation (60) avec l'état de repos de bus, ou retour pour recevoir (102) l'octet suivant du message si le bus n'est pas dans un état de repos.
